# EUROPEAN PATENT APPLICATION

(11) **EP 2 737 935 A1**
(43) Date of publication of application: **04.06.2014**
(21) Application number: 13194622.0
(22) Date of filing: 27.11.2013
(51) Int. Cl.: B01D 53/14, B01D 53/50, B01D 53/62

(54) **Post absorber scrubbing of SO3**

(30) Priority: 30.11.2012 US 201213690813
(71) Applicant: Alstom Technology Ltd, 5400 Baden (CH)
(72) Inventor: Bedell, Stephen Alan, Knoxville, TN 37934 (US)

(57) **Abstract**

A flue gas treatment system includes a CO₂ absorber having an inlet for receiving a SO₃ aerosol containing gas in the CO₂ absorber. An amine solvent is supplied to the CO₂ absorber. The CO₂ absorber has a high temperature region and a lower temperature region. The high temperature region is configured to create an amine vapor and the lower temperature region is configured to cause the amine vapor to condense on the SO₃ aerosol creating SO₃/amine droplets. A SO₃ aerosol removal device is positioned downstream of the CO₂ absorber for removing the SO₃/amine droplets from the gas.

## Description

### TECHNICAL FIELD

The present disclosure is generally directed to a system and method for removing (e.g., scrubbing) sulfur trioxide (SO₃) from a gas, and in particular is directed to removing the SO₃ from a flue gas downstream of a carbon dioxide (CO₂) absorber/regenerator by utilizing condensation to enlarge the SO₃ aerosol size.

### BACKGROUND

In the combustion of a fuel, such as coal, oil, natural gas, peat, waste, etc., in a combustion plant, such as those associated with boiler systems for providing steam to a power plant, a hot process gas (or flue gas) is generated. Such a flue gas will often contain pollutants such as carbon dioxide (CO₂), sulfur dioxide (SO₂) and sulfur trioxide (SO₃). The negative environmental effects of releasing CO₂, SO₂, and SO₃ to the atmosphere have been widely recognized, and have resulted in the development of processes adapted for removing the pollutants from the hot process gas generated in the combustion of the above mentioned fuels.

Systems and methods for removing CO₂ from a gas stream include CO₂ capture systems in which a flue gas is contacted with an aqueous absorbent solvent. Such systems include, for example, CO₂ absorbers using a chilled ammonia based ionic solution. Chemical absorption with amines is one such CO₂ capture technology being explored.

SO₃ can be present in the flue gas in an aerosol form. The SO₃ aerosols are generally submicron in size and can be difficult to capture. Typically, SO₃ capture systems have been located upstream of the aforementioned CO₂ absorbers to preclude interaction of the SO₃ with the amines in the CO₂ absorbers. Such SO₃ capture systems include those employing fine atomized water sprays and high pressure drop demister devices having torturous paths for capture of the SO₃. However, such SO₃ capture systems are costly to operate because of the high energy required to generate a sufficiently fine atomized spray and to flow flue gas through the high pressure drop devices.

### SUMMARY

According to aspects illustrated herein, there is provided a flue gas treatment system which includes a CO₂ absorber having an inlet for receiving a SO₃ aerosol containing gas in the CO₂ absorber. An amine solvent is supplied to the CO₂ absorber. In one embodiment, there is provided a separate regeneration unit which removes the CO₂ from the solvent and returns lean solvent to the CO₂ absorber. The reaction of CO₂ with the amine solvent causes the formation of a high temperature region and a lower temperature region within the CO₂ absorber. This configuration causes the amine vapor to condense on the SO₃ aerosol creating SO₃/amine droplets. A SO₃ aerosol removal device is positioned downstream of the CO₂ absorber/regenerator for removing the SO₃/amine droplets from the gas.

According to further aspects illustrated herein, there is disclosed a method for treatment of gas. The method includes providing a CO₂ absorber. The CO₂ absorber has a high temperature region and a lower temperature region. A SO₃ aerosol removal device is positioned downstream of the CO₂ absorber. An amine solvent is supplied to the CO₂ absorber. A SO₃ aerosol and CO₂ containing gas is supplied to the to the CO2 absorber. The CO₂ is reacted with the amine solvent in the CO₂ absorber/regenerator. An amine vapor is generated in the high temperature region of the CO2 absorber. The amine vapor is condensed on the SO₃ aerosol in the low temperature region, creating SO₃/amine droplets. The SO₃/amine droplets are removed from the gas in the SO₃ aerosol removal device.

The above described and other features are exemplified by the following figures and in the detailed description.

### BRIEF DESCRIPTION OF THE DRAWINGS

Referring now to the figures, which are exemplary embodiments, and wherein the like elements are numbered alike:
FIG. 1 is a schematic diagram of a gas treatment system;
FIG. 2 is an enlarged schematic cross sectional view of the CO₂ absorber of FIG. 1; and
FIG. 3 is a schematic diagram of another gas treatment system.

### DETAILED DESCRIPTION

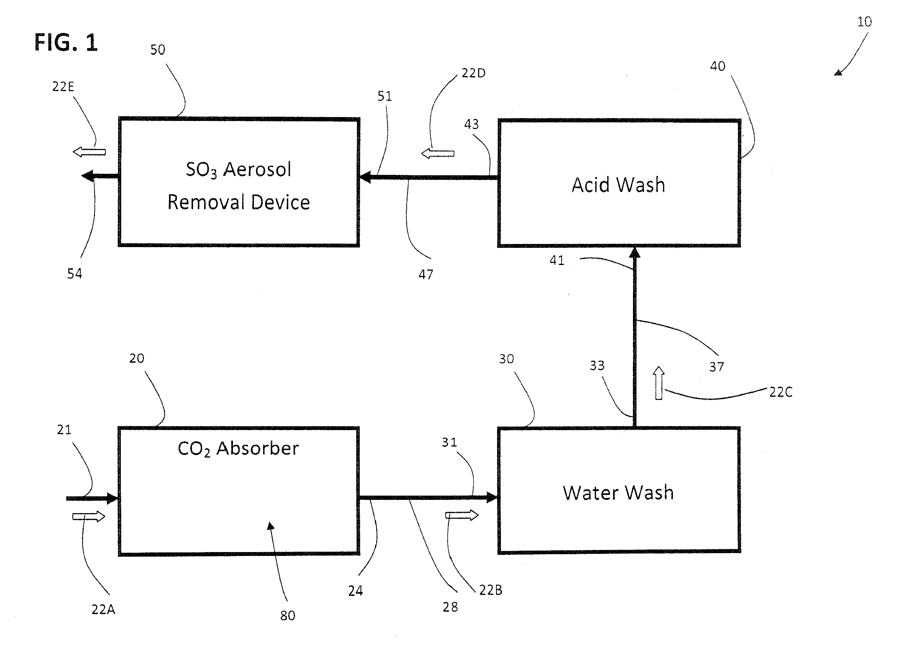

FIG. 1 illustrates the gas side of a system 10 for treatment of a carbon dioxide (CO₂) containing gas stream such as but not limited to a flue gas resulting from the combustion of a fuel. The system 10 also includes ammonia and/or amine based systems and water wash systems such as those disclosed in commonly owned and copending U.S. Patent Application Serial No. 12/556,043, (Publication No. US 2010-0083831), entitled "Chilled Ammonia Based CO₂ Capture System with Water Wash System," filed September 9, 2009, and U.S. Patent Application Serial No. 12/849,128 (Publication No. 2001/0068585, entitled "Method and System for Capturing and Utilizing Energy Generated in a Flue Gas Stream Processing System" filed August 3, 2010, which are incorporated herein by reference in their entirety. However, for simplicity, FIG. 1 only shows the gas side of the system 10 for treatment of a carbon dioxide (CO₂) containing gas stream. The gas treatment system 10 removes or scrubs CO₂, ammonia, amine vapor and/or SO₃ aerosols from the gas. The gas treatment system 10 includes a carbon dioxide (CO₂) absorber 20, a water wash system 30, an acid wash system 40 and a sulfur trioxide (SO₃) removal system 50, arranged as described herein. In one embodiment, an additional regenerator unit (not shown) is supplied to remove the CO₂ from the amine solvent and return the fresh amine to the CO₂ absorber 20. The SO₃ removal system 50 removes the SO₃ from the gas downstream of the CO₂ absorber/regenerator 20 by utilizing condensation to enlarge the SO₃ aerosol size, as described herein.

As illustrated in FIG. 1, the CO₂ absorber 20 includes an absorber tower for removing CO₂ from the gas stream using a solution that absorbs CO₂. The CO₂ absorber 20 has a gas inlet 21 for receiving the CO₂ rich gas 22A, such as flue gas which is rich in CO₂, from a combustion system (not shown) into the CO₂ absorber 20. The CO₂ absorber 20 has a flue gas outlet 24 for discharging the CO₂ lean flue gas 22B from the CO₂ absorber 20. The CO₂ absorber 20 includes an amine solvent 80 for removing CO₂ from the CO₂ rich flue gas 22A, thereby producing CO₂ lean flue gas 22B. Since FIG. 1 only illustrates the gas side of the system 10 for treatment of a carbon dioxide (CO₂) containing gas stream, components for conveying the amine solvent 80 to and from the system are not shown for reasons of simplicity.

The amine solvent 80 is any suitable CO₂ absorbing solvent such as an amine-containing solvent. In one embodiment, the amine-containing solvent is in an aqueous solvent; however it is contemplated that the amine-containing solvent may be in a nonaqueous solvent. The amine compound(s) utilized in the amine-containing solvent may be a diamine, a triamine, a cyclic amine, an amino acid, or a combination thereof. In one embodiment, the amine compound forms a bicarbonate salt or a carbamate salt. In a particular example, the amine-containing solvent is 2-amino-2-methyl-1-propanol in an aqueous solvent.

Other examples of the amine compound include, but are not limited to, monoethanolamine, (MEA), N-ethyldiethanolamine (2-[ethyl-(2-hydroxyethyl)-amino]-ethanol, EDEA), 2-(dimethylamino)-ethanol (N,N-dimethylaminoethanol, DMEA), 2-(diethylamino)-ethanol (N,N-diethylethanolamine, DEEA), 3-(dimethylamino)-1-propanol (DMAP), 3-(diethylamino)-1-propanol, 1-(dimethylamino)-2-propanol (N,N-dimethylisopropanolamine), N-methyl-N,N-diethanolamine (MDEA), and 2-(diisopropylamino)-ethanol (N,N-diisopropylethanolamine).

Examples of cyclic amine compounds include, but are not limited to triethylenediamine, 1-hydroxyethylpiperidine, 2-hydroxyethylpiperidine, bis(hydroxyethyl)piperazine, N,N'-dimethylpiperazine, 2,5-dimethylpiperazine, 2,4,6-trimethyl-[1,3,5]triazinane, 1-methyl-2-pyrrolidineethanol, piperazine, homopiperazine, 1-hydroxyethylpiperazine, 4-hydroxyethylpiperazine, 1-methylpiperazine, and 2-methylpiperazine.

As illustrated in FIG. 1, the water wash system 30 has an inlet 31 that is in fluid communication, for gas transport, with the gas outlet 24 of the CO₂ absorber/regenerator 20 via a duct 28, for receiving the CO₂ lean flue gas 22B into the water wash system 30. The water wash system 30 has a gas outlet 33 for discharging water washed flue gas 22C therefrom. The water wash system 30 is configured to receive water for removing solvent vapor (e.g., amine vapor 80') from the CO₂ lean flue gas 22B. Since FIG. 1 only illustrates the gas side of the system 10 for treatment of a carbon dioxide (CO₂) containing gas stream, components for conveying the water to and from the system are not shown for reasons of simplicity.

As illustrated in FIG. 1, the acid wash system 40 has a gas inlet 41that is in fluid communication, for gas transport, with the gas outlet 33 of the water wash system 30 via a duct 37, for receiving the water washed flue gas 22C in the acid wash system 40. The acid wash system 40 has a gas outlet 43 for discharging the acid washed flue gas 22D from the acid wash system 40. The acid wash system 40 is configured to receive an acid solution for removing ammonia (NH₃) vapor from the water washed flue gas 22C. Since FIG. 1 only illustrates the gas side of the system 10 for treatment of a carbon dioxide (CO₂) containing gas stream, components for conveying the acid solution to and from the system are not shown for reasons of simplicity.

As illustrated in FIG. 1, the SO₃ aerosol removal system 50 has a gas inlet 51 that is in fluid communication, for gas transport, with the gas outlet 43 of the acid wash system 40 via a duct 47, for receiving the acid washed flue gas 22D into the SO₃ removal system 50. The SO₃ aerosol removal system 50 removes SO₃ from the acid washed flue gas 22D, thereby creating SO₃ lean flue gas 22E which is discharged via an outlet 54 of the SO₃ removal system 50. In one embodiment, the SO₃ aerosol removal system 50 is a low pressure drop demister. In one embodiment, the SO₃ removal system 50 includes an atomizing spray nozzle that generates with large droplets (e.g., water droplets or other fluid droplets) that are energy efficient to create, compared to those creating fine droplet mists. Suitable demisters include, but are not limited to a plate and baffle type demister, a wire mesh demister and a Brownian demister. Since FIG. 1 only illustrates the gas side of the system 10 for treatment of a carbon dioxide (CO₂) containing gas stream, the internals of the SO₃ aerosol removal system 50 and components for conveying the water or other fluids to and to and from the system are not shown for reasons of simplicity. While the SO₃ aerosol removal system 50 is shown and described as being downstream of the acid wash system 40, the present disclosure is not limited in this regard as the SO₃ aerosol removal system 50, may be located anywhere in the system 10, including but not limited to upstream of the acid wash system 40 or the water wash system 30.

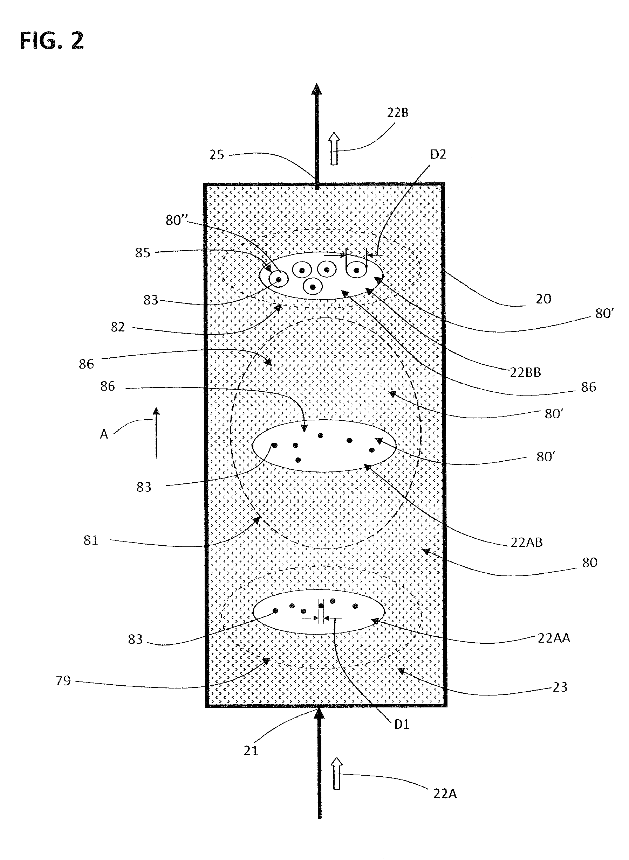

Referring to FIG. 2 a portion of the CO₂ absorber 20 is illustrated with the gas, for example CO₂ rich flue gas 22A, flows into the CO₂ absorber 20 via the gas inlet 21, through the CO₂ absorber 20 in the general direction of the arrow A and out of the CO₂ absorber 20 via the gas outlet 25. In this example amine solution 80 flow is directed opposite to the gas flow direction shown by the arrow A, though in some cases this could be performed in a concurrent configuration.

The portion of the CO₂ absorber 20 has amine solvent 80 therein.
The amine solvent 80 varies in temperature throughout the CO₂ absorber 20. For example, the CO₂ absorber 20 defines a first low temperature region 79 proximate the gas inlet 21. The CO₂ absorber 20 also defines a high temperature region 81 downstream (relative to gas flow illustrated by the arrow A) of the first low temperature region 79. In the high temperature region 81 the temperature of the amine solvent 80 rises as the CO₂ rich flue gas 22A exothermically reacts with the CO₂ in the flue gas. The CO₂ absorber 20 defines a second low temperature region 82 downstream (relative to gas flow) of the high temperature region 81. The first low temperature region 79 and the second low temperature region 82 are at lower temperatures than the temperature in the high temperature region 81.

Referring to FIG. 2, the CO₂ rich flue gas 22A undergoes a CO₂ removal process which is illustrated by three bubbles within the amine solution 80, namely, a first flue gas bubble 22AA, a second flue gas bubble 22AB and a third flue gas bubble 22BB, travelling from the gas inlet 21 to the gas outlet 25 in the general direction of the arrow A. The three bubbles are expanded views of each respective region to more clearly represent the progress of the condensation of the volatized amine 80' on the SO₃ aerosols 83. Each of the first flue gas bubble 22AA, the second flue gas bubble 22AB and the third flue gas bubble 22BBrepresent the state of one flue gas bubble at three different points in time during the travel through the CO₂ absorber 20. The first flue gas bubble 22AA is shown in the first low temperature region 79. The first flue gas bubble 22AA includes SO₃ aerosols 83 of the submicron size D1 entrained therein. The second flue gas bubble 22AB is shown in the high temperature region 81. The second flue gas bubble 22AB includes the SO₃ aerosols 83 of the submicron size D1 entrained therein. The temperature rise in the high temperature region 81 causes a portion of the amine solvent 80 to volatize into volatized amine 80'. A portion of the volatized amine 80' volatizes into the second flue gas bubble 22AB. In addition, the temperature rise during the CO₂ absorption process generates ammonia NH₃ vapor 86 from amine degradation reactions. A portion of the NH₃ vapor 86 volatizes into the second flue gas bubble 22AB.

In the second low temperature region 82, the SO₃ aerosols 83 in the third flue gas bubble 22BB are nucleation sites upon which the volatized amine 80' condense and form an amine condensate 80" on the SO₃ aerosols 83 creating droplets each including one of the SO₃ aerosol particles 83 and amine condensate 80" condensed thereon, which is referred to herein as SO₃/amine droplets 85. The SO₃/amine droplets 85 have a diameter D2, which is greater than the diameter D1 of the SO₃ aerosols 83. In one embodiment, the diameter D2 is greater than one and a half (i.e., 1.5) times the diameter D2, and preferably D2 is greater than twice the magnitude of D 1. In another embodiment, D2 is greater than three times the magnitude of D1. In yet another embodiment, D2 is greater than four times the magnitude of D1. In yet another embodiment, D2 is greater than five times the magnitude of D1. In yet another embodiment, D2 is greater than 5.3 times the magnitude of D1.

Referring to FIGS. 1 and 2, during combustion of a fuel in a furnace, flue gas 22 is generated and discharged into the CO₂ absorber 20 via the inlet 21. The flue gas 22 contains CO₂ and SO₃ aerosol 83. An amine solvent 80 is supplied to the CO₂ absorber 20. In the high temperature region 81, the CO₂ exothermically reacts with the amine solvent 80 which absorbs the CO₂. During the absorption of the CO₂, an amine degradation product including NH₃ vapor 86 is generated. In the high temperature region 81 a portion of the amine volatizes into the second flue gas bubble 22AB. The flue gas 22 flows (e.g., the second flue gas bubble 22AB) downstream of the high temperature region 81 into the second low temperature region 82, in which the flue gas 22is referred to as the third flue gas bubble 22BB. In the second low temperature region 82 a portion of the amine vapor 80' condenses on the nucleation sites provided by the SO₃ aerosols 83 as illustrated in the third bubble 22BB, thereby creating the SO₃/amine droplets 85.

The CO₂ lean flue gas 22B is discharged from the CO₂ absorber 20 in a CO₂ lean state and having amine vapor 80', the NH₃ vapor 86 and the SO₃/amine droplets 85. The CO₂ lean flue gas 22B discharged from the CO₂ absorber/regenerator 20 is supplied to the water wash system 30 via the duct 28 and the gas inlet 31. The amine vapor 80'is removed from the CO₂ lean flue gas 22 in the water wash system 30.

The water washed flue gas 22C is discharged from the water wash system 30 having some of the NH₃ vapor 86 and the SO₃/amine droplets 85 contained therein. The water washed flue gas 22C is supplied to the acid wash system 40 via the duct 37 and the inlet 41. The NH₃ vapor is removed from the water washed flue gas 22C in the acid wash system 40 as described herein, thereby creating the acid washed flue gas 22D.

The acid washed flue gas 22D is discharged from the acid wash system 40 having the SO₃/amine droplets 85 contained therein. The acid washed flue gas 22D is supplied to the SO₃ aerosol removal system 50 via the duct 47 and the gas inlet 51. The SO₃/amine droplets 85 are removed from the acid washed flue gas 22D in the SO₃ aerosol removal system 50 via energy efficient operation of the low pressure drop demister and/or the atomizing spray nozzle with large droplets (e.g., water or other fluid droplets) that are energy efficient to produce compared to those creating fine droplet mists.

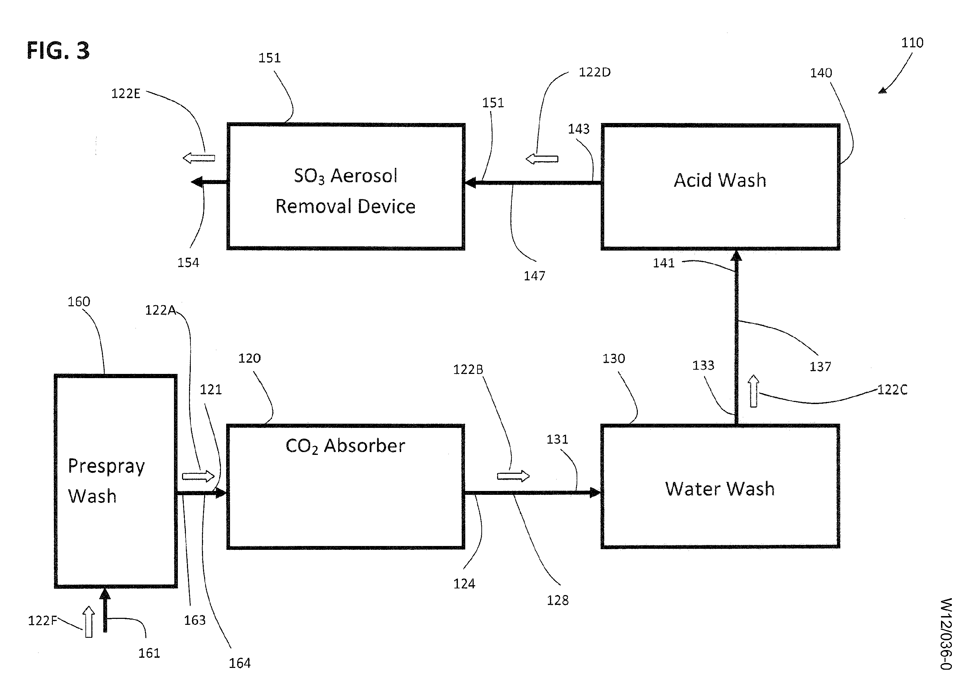

The gas treatment system of FIG. 3 is similar to that gas treatment system of FIG. 1. Therefore, like elements are given the same element numbers preceded by the numeral 1. The gas treatment system 110 includes a carbon dioxide (CO₂) absorber 120, a water wash system 130, an acid wash system 140 and a sulfur trioxide (SO₃) aerosol removal system 150, arranged as described herein for the gas treatment 10. The gas treatment system 110 includes a pre-spray wash system 160 positioned upstream of the CO₂ absorber 120 and is in fluid communication, for gas transport, therewith via a duct 164.

During operation, the flue gas 122 is supplied to the pre-spray wash system 160. The CO₂ rich flue gas 122F includes CO₂ and SO₃ aerosol. The water spray cools the CO2 rich flue gas 122F and allows condensation of water vapor on the SO₃ aerosol enlarging the size of the SO₃ aerosol. Thus the larger SO₃ aerosol is more likely to be removed by subsequent treatment in the carbon dioxide (CO₂) absorber 120, a water wash system 130, an acid wash system 140 and a sulfur trioxide (SO₃) removal system 150, than gas treatment systems without pre-spray wash systems.

### EXAMPLE 1

Referring to FIGS. 1 and 2, a 30 wt% aqueous solution of monoethanolamine (MEA) 80 is supplied to the CO₂ absorber 20. The MEA 80 reacts exothermically with the CO₂ in the low temperature region 79 of the CO₂ absorber 20 resulting in an increase in temperature of about 20 °C above to form the high temperature region 81 of the CO₂ absorber 20. Thus the high temperature region 81 is at about 40 to 60 °C. The difference in saturation vapor pressure of MEA 80 between the high temperature region 81 and the first low temperature region 79 and/or the second low temperature region 82 is about 66 ppmv at an average loading of 0.4 moles CO₂/mole amine. Thus a portion of the MEA 80 volatizes into MEA vapor 80'. The difference in water saturation vapor pressure between the high temperature region 81 and first low temperature region 79 and/or the second low temperature region 82 is about 170 ppmv. About 1 ppmv of SO₃ aerosol 83 travels through the high temperature region 81, first low temperature region 79 and the second low temperature region 82 and provides nucleating sites for the MEA 80' to condense upon the SO₃ aerosol 83 creating SO₃/amine droplets 85 consisting of the SO₃ aerosol 83 with MEA condensate 80" condensed thereon. The SO₃/amine droplets 85 are about 5.3 times larger in diameter than the SO₃ aerosol 83. For example, a portion of the SO₃ aerosol 83 have a diameter of about 0.5 microns and the SO₃/amine droplets 85 have a diameter of about 2.6 microns. The larger SO₃/amine droplets 85 can be removed from the CO₂ rich flue gas 22A, the water washed flue gas 22C and the acid washed flue gas 22D more efficiently (e.g., using less energy) than the removal of the smaller SO₃ aerosol 83.

There is also disclosed herein a method for treatment of gas. The method includes providing a CO₂ absorber 20 having a gas inlet 21. The CO₂ absorber 20 has a high temperature region 81 positioned between a first low temperature region 79 and second low temperature region 82. An SO₃ aerosol removal device 50 is positioned downstream of the CO₂ absorber 20. An amine 80 is supplied to the CO₂ absorber20. An SO₃ aerosol and CO₂ containing gas is supplied to the to the CO₂ absorber 20. The CO₂ is reacted with the amine 80 in the CO₂ absorber 20. An amine vapor 80' is generated in the high temperature region 81 of the CO₂ absorber 20. The amine vapor 80' volatized into the second flue gas bubble 22AB is condensed on the SO₃ aerosol 83in the low temperature region 82 as shown in the third flue gas bubble 22BB, creating SO₃/amine droplets 85. The SO₃/amine droplets 85 are removed from the gas in the SO₃ aerosol removal device 50.

In one embodiment, the method includes providing a water wash 30 downstream of and in fluid communication, for gas transport, with the CO₂ absorber 20 and supplying water to the water wash system 30. The amine vapor 80' is removed from the CO₂ lean flue gas 22B in the water wash system 30.

In one embodiment, an acid wash system 40 is provided downstream of and in fluid communication, for gas transport, with the water wash system 30. Ammonia vapor 86 is generated in the CO₂ absorber as a result of degradation of the amine solvent 80. An acid solvent is introduced to the acid wash system 40 to remove the ammonia vapor 86 from the water washed flue gas 22C.

In one embodiment, a pre-spray wash system 160 is provided upstream of and in fluid communication, for gas transport, with the CO₂ absorber 20. Water is introduced to the pre-spray wash system so that the water communicates with the CO2 rich flue gas 122F and vaporizes the water. The water condenses on the SO₃ aerosol 83.

While the present invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A gas treatment system comprising:
a CO₂ absorber having an inlet for receiving a SO₃ aerosol containing gas in the CO₂ absorber, an amine solvent supplied to the CO₂ absorber the CO₂ absorber having a high temperature region and a lower temperature region, the high temperature region being configured to create an amine vapor and the lower temperature region being configured to cause the amine vapor to condense on the SO₃ aerosol creating SO₃/amine droplets; and
a SO₃ aerosol removal device positioned downstream of the CO₂ absorber for removing the SO₃/amine droplets from the gas.

2. The gas treatment system of claim 1, further comprising a water wash system positioned downstream of and in fluid communication, for transport of the gas, with the CO₂ absorber, the water wash system being configured to remove the amine vapor from the gas.

3. The gas treatment system of claim 2, further comprising an acid wash system positioned downstream of and in fluid communication, for transport of the gas, with the water wash system, the acid wash system being configured to remove the ammonia vapor, generated in the CO₂ absorber, from the gas.

4. The gas treatment system of claim 3, wherein the acid wash system is positioned upstream of and is in fluid communication, for transport of the gas, with the SO₃ aerosol removal device.

5. The gas treatment system of claim 1, wherein the SO₃ aerosol removal device is a demister.

6. The gas treatment system of claim 1, comprising pre-spray wash system positioned upstream of and in fluid communication, for transport of the gas, with the CO₂ absorber, the pre-spray wash system being configured to condense water vapor on the SO₃ aerosol.

7. The gas treatment system of claim 1, wherein particles of the SO₃ aerosol have a first diameter and the CO₂ absorber system being configured to create the SO₃/amine droplets of a second diameter which is greater than 1.5 times the first diameter.

8. A method for treatment of gas comprising:
providing a CO₂ absorber/regenerator, with the absorber having a high temperature region and a lower temperature region;
providing a SO₃ aerosol removal device positioned downstream of the CO₂ absorber;
supplying an amine to the CO₂ absorber;
supplying a SO₃ aerosol and CO₂ containing gas to the absorber;
reacting the CO₂ with the amine in the CO₂ absorber;
generating an amine vapor in the high temperature region;
condensing the amine vapor on the SO₃ aerosol in the low temperature region, thereby creating SO₃/amine droplets; and
removing the SO₃/amine droplets from the gas in the SO₃ aerosol removal device.

9. The method of claim 8, wherein a water wash system is provided downstream of and in fluid communication, for transport of the gas, with the CO₂ absorber;
introducing water to the water wash system; and
removing the amine vapor from the gas in the water wash system.

10. The method of claim 9, wherein an acid wash system is provided downstream of and in fluid communication, for transport of the gas, with the water wash system;
generating ammonia vapor in the CO₂ absorber;
supplying an acid solvent in the acid wash system; and
removing the ammonia vapor from the gas in the acid wash system.

11. The method of claim 10, wherein the acid wash system is provided upstream of and is in fluid communication, for transport of the gas, with the SO₃ aerosol removal device.

12. The method of claim 11, wherein the SO₃ aerosol removal device is a demister.

13. The method of claim 8, further comprising:
providing a pre-spray wash system upstream of and in fluid communication, for transport of the gas, with the CO₂ absorber;
introducing water in the gas;
vaporizing the water in the pre-spray wash system; and
condensing the water vapor on the SO₃ aerosol.

14. The method of claim 8, wherein particles of the SO₃ aerosol have a first diameter and the SO₃/amine droplets are of a second diameter which is greater than 1.5 times the first diameter.

15. The method of claim 8, wherein the amine solvent comprises monoethanolamine.
